# EUROPÄISCHE PATENTSCHRIFT

(11) **EP 0 742 262 B1**
(45) Veröffentlichungstag und Bekanntmachung des Hinweises auf die Patenterteilung: **19.07.2000**
(21) Anmeldenummer: 96106897.0
(22) Anmeldetag: 02.05.1996
(51) Int. Cl.: C08K 5/5397, C08L 67/06

(54) **Pigmentierte Formteile**
Pigmented moulded articles
Articles moulés pigmentés

(30) Priorität: 11.05.1995 DE 19517205
(43) Veröffentlichungstag der Anmeldung: 13.11.1996
(73) Patentinhaber: DSM RESINS B.V., 8022 AW Zwolle (NL); Lamilux Heinrich Strunz GmbH & Co. KG, 95111 Rehau (DE)
(72) Erfinder: Günther, Heinz, 67122 Altrip (DE); Folda, Thomas, Dr., 67435 Neustadt (DE)
(74) Vertreter: den Hartog, Jeroen Hendrikus Joseph

(56) Entgegenhaltungen:
- EP-A- 0 160 724
- EP-A- 0 615 980
- WO-A-90/01512

## Beschreibung

Die Erfindung betrifft ein Verfahren zur Herstellung von an der Oberfläche pigmentierten Formteilen auf Basis von Laminaten aus glasfaserverstärkten thermisch härtbaren ungesättigten Polyesterharzen.

Um Formkörper mit glatter, glänzender Oberfläche aus glasfaserverstärkten UP-Harze(GFK)-Laminaten zu erhalten, trägt man auf die Laminat-Oberfläche eine Feinschicht aus einem glasfaserfreien UP-Harz auf, eine sogenannte Gelcoat-Schicht. Derartige lichthärtbare Feinschichtharze sind beispielsweise in EP-A 7 086 beschrieben. Durch die rasche Härtung mit UV-Licht wird eine nicht vergilbende Feinschicht erzeugt. Es wird aber darauf hingewiesen, daß die Feinschichten transparent sein müssen, und daß höchstens für UV-Licht durchlässige Füllstoffe anwesend sein dürfen. Für manche Anwendungszwecke werden aber pigmentierte GFK-Formteile benötigt. Der Erfindung lag also die Aufgabe zugrunde, Laminate aus glasfaserverstärkten UP-Harzen bereitzustellen, die mit einer lichthärtbaren, pigmentierten Oberflächen-Schicht versehen sind.

Diese Aufgabe wird durch das erfindungsgemäße Verfahren gelöst.

Grundlage für die erfindungsgemäßen pigmentierten Formteile sind GFK-Laminate auf Basis von ungesättigten Polyesterharzen.

Ungesättigte Polyesterharze im Sinne der Erfindung sind Mischungen von ungesättigten Polyestern, Vinylestern oder Vinylesterurethanen mit copolymerisierbaren Monomeren.

Ungesättigte Polyester im engeren Sinn sind die üblichen Kondensationsprodukte aus mehrwertigen, insbesondere zweiwertigen Carbonsäuren und deren veresterbaren Derivaten, insbesondere deren Anhydriden und mehrwertigen, insbesondere zweiwertigen Alkoholen, die gegebenenfalls zusätzlich Reste einwertiger Carbonsäuren, einwertiger Alkohole oder Reste von Hydroxycarbonsäuren enthalten, wobei zumindest ein Teil der Reste über ethylenisch ungesättigte copolymerisierbare Gruppen verfügen muß. Als mehrwertige, insbesondere zweiwertige, gegebenenfalls ungesättigte Alkohole eignen sich die üblichen insbesondere acyclische Gruppen, cyclische Gruppen als auch beide Arten von Gruppen aufweisende Alkandiole und Oxaalkandiole, wie z.B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Dipropylenglykol, Cyclohexandiol-1,2, 2,2-Bis-(p-hydroxycyclohexyl)-propan, Trimethylolpropanmonoallylether oder Butendiol-1,4. Bevorzugt sind Ethylenglykol, Propylenglykol, Diethylenglykol, Dipropylenglykol, Neopentylglykol und deren Mischungen.

Ferner können ein-, drei- oder höherwertige Alkohole, wie z.B. Ethylhexanol, Fettalkohole, Benzylalkohole, 1,2-Di-(allyloxy)-propanol-3, Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische olefinisch ungesättigte, vorzugsweise α,β-olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, α-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-l,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z.B. Ethylhexansäure, Fettsäuren, Methacrylsäure, Propionsäure, Benzoesäure, 1,2,4-Benzoltricarbonsäure oder 1,2,4,5-Benzoltetracarbonsäure. Vorzugsweise verwendet werden Maleinsäure bzw. deren Anhydrid, Fumarsäure und o-Phthalsäureanhydrid.

Das Molverhältnis von ungesättigten zu gesättigten Dicarbonsäuren liegt vorzugsweise zwischen 1:0 und 1:2,5.

Von dem Begriff ungesättigte Polyester im Sinne der Erfindung sind auch Vinylester mit umfaßt.

Unter Vinylestern versteht man gemeinhin Umsetzungsprodukte von Polyepoxiden mit ungesättigten Monocarbonsäuren, vorzugsweise Methacrylsäure. Auch diese Produkte werden in ungesättigten Monomeren, vorzugsweise Styrol, gelöst. Diese Harze werden beispielsweise in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschreiben werden, weisen dagegen höhere Wärmeformbeständigkeiten, aber geringere Zähigkeiten auf.

Kennzeichnend für die Klasse der Vinylesterharze ist die Gruppe 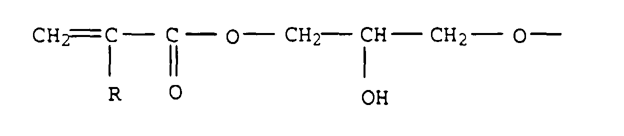 mit R=H oder CH₃.

Schließlich sind auch Vinylesterurethan als ungesättigte Polyester geeignet. Sie weisen im allgemeinen folgende Gruppen auf:
a) 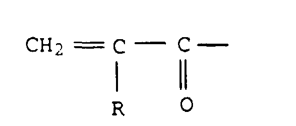 (mit R = H oder CH₃).
b) 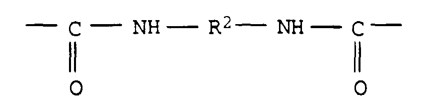 (mit R² = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls
c) -O-R³-O-
(mit R³ = aliphatischer, cycloaliphatischer oder aromatischer Rest mit 2 bis 100 C-Atomen).

Vorzugsweise ist das Vinylesterurethan ein Umsetzungsprodukt aus
- einem polyfunktionellen Isocyanat,
- gegebenenfalls einem mehrwertigen Alkohol,
- gegebenenfalls einem mehrwertigen Amin,
- einem Hydroxyalkyl-(meth)acrylat,
wobei bei der Umsetzung das Gewichtsverhältnis Isocyanat:(Alkohol+Amin) zwischen 100:0 und 100:300 beträgt und das Äquivalentverhältnis Hydroxyalkyl(meth)acrylat zu den freien Isocyanatgruppen des Umsetzungsproduktes zwischen 3:1 und 1:2 liegt.

Die ungesättigten Polyesterharze enthalten als Monomeres Styrol. Das Verhältnis Polyester:Styrol liegt dabei vorzugsweise zwischen 20:80 und 90:10, insbesondere zwischen 50:50 und 75:25. Styrol als Comonomeres kann ganz oder teilweise durch andere übliche ethylenisch polymerisierbare Monomere ersetzt werden, z.B. Vinylverbindungen, wie substituierte Styrole, Ester der Acryl- und Methacrylsäure oder Allylverbindungen, wie Diallylphthalat.

Die GFK-Laminate enthalten Glasfasern in Form von Matten, Geweben oder Vliesen, die auf übliche Weise aus Endlos- oder Schnittglasfasern hergestellt werden können, wobei auf 100 Gew.-Teile Harz im allgemeinen 20 bis 50 Gew.-Teile Fasern kommen.

Ferner kann das GFK-Laminat die üblichen Zusatzstoffe enthalten, wie Füllstoffe, Eindickmittel, Gleitmittel, Inhibitoren und Flammschutzmittel.

Es ist bevorzugt, daß die Laminate selbst mit den gleichen Pigmenten wie sie in der Gelcoat-Schicht verwendet werden, eingefärbt sind, und zwar vorzugsweise in Mengen von 5 bis 10 Gew.-Teilen, bezogen auf 100 Gew.-Teile Harz.

Schließlich enthält das Laminat übliche thermisch zerfallende Radikalinitiatoren, vorzugsweise Peroxide in Mengen von 0,1 bis 4 Gew.-Teilen auf 100 Gew.-Teile Harz. Bevorzugt sind Initiatoren, die bei 80 bis 150°C wirksam sind, beispielsweise tert. Butylperoxid, tert. Butylperbenzoat, 1.1-Di(tert.butylperoxy)-3,3,5-trimethylcyclohexan, sowie Methylisobutylketonperoxid, gegebenenfalls im Gemisch mit geringen Mengen von Cobalt-Beschleunigern. Auch kalthärtende Initiatorsysteme sind geeignet, beispielsweise Mischungen aus 0,2 bis 5 Gew.-Teilen MethylethylKetonperoxid oder Dibenzoylperoxid und 0,2 bis 5 Gew.-Teilen eines Cobalt- oder Aminbeschleunigers, jeweils bezogen auf 100 Gew.-Teile Harz.

Bei dem erfindungsgemäßen Verfahren wird zunächst eine 0,1 bei 1 mm, vorzugsweise 0,2 bis 0,5 mm dicke Gelcoat-Schicht auf eine feste Unterlage aufgebracht. Die Gelcoat-Schicht besteht aus einem lichthärtbaren UP-Harz,wobei grundsätzlich die gleichen Harze wie bei den oben beschriebenen Laminaten in Frage kommen. Bevorzugt sind solche auf Basis von Orthophthalsäure bzw. Isophthalsäure/Maleinsäureanhydrid einerseits und Diethylenglykol bzw. Neopentylglykol andererseits.

Sie enthalten 0,01 bis 3, vorzugsweise 0,1 bis 1 Gew.-% eines Acylphosphinoxid- oder Bisacylphosphinoxid-Photoinitors. Derartige Initiatoren sind in EP-A 7 086 bzw. EP-A 184 095 und EP-A 615 980 ausführlich beschrieben. Bevorzugt ist 2,4,6-Trimethylbenzoyl-diphenyl-phosphinoxid. Diese hochwirksamen Photoinitiatoren können auch im Gemisch mit 0,1 bis 1 Gew.-% eines konventionellen Photoinitiators, wie z. B. Benzildimethylketal, Benzoinisopropylether oder Diethoxyacetophenon eingesetzt werden. Um eine vollständige Aushärtung der Gelcoat-Schicht zusammen mit dem Laminat zu bewirken, ist es zweckmäßig, 0,1 bis 1 Gew.-% eines thermisch zerfallenden Peroxid-Initiators zuzusetzen, z. B. tert.Butylperoxyethylhexanoat. Zweckmäßig ist auch der Zusatz von 0,1 bis 1 Gew.-% eines üblichen Thixotropiermittels, wie feinpulveriger Kieselsäure, sowie von Lichtschutzmitteln und Inhibitoren.

Erfindungsgemäß enthält die Gelcoat-Schicht 0,5 bis 10, vorzugsweise 1 bis 5 Gew.-% eines für UV-Licht undurchlässigen Farbpigments. Geeignete Pigmente sind z. B. Eisenoxide, Chromoxide, Titandioxid, Phthalocyanin-Verbindungen und Monoazo-Verbindungen.

Die Pigmente werden üblicherweise als etwa 50%ige Pasten in einem Phlegmatisierungsmittel eingesetzt. Nach den Ausführungen in EP-A 8 086 war es nicht zu erwarten, daß derartig pigmentierte Gelcoat-Schichten lichthärtbar sind.

Als feste Unterlage sind Kunststoffolien geeignet, beispielsweise solche aus Polyester oder Cellophan. Sie sollten möglichst styrolundurchlässig sein, z. B. sind Polyethylenfolien weniger gut geeignet, da sie mit Styrol anquellen. Das flüssige Reinharz kann nach üblichen Methoden, z. B. durch Rakeln, Aufstreichen oder Spritzen auf die Unterlage aufgebracht werden. Es ist bevorzugt, eine Kunststoffolie auf ein Gummiförderband aufzulegen und darauf dann das Reinharz aufzurakeln, z. B. durch Breitschlitzdüsen. Die Breite des Auftrages kann in weiten Bereichen schwanken, bevorzugt sind 1 bis 4 m, je nach Breite des herzustellenden Fertigteils.

Anschließend wird dann die Gelcoat-Schicht mit UV-Licht bestrahlt. Bevorzugt sind Strahlen der Wellenlänge 350 - 420 nm. Grundsätzlich ist auch Sonnenlicht geeignet, welchen einen entsprechenden UV-Anteil hat. Der Abstand zwischen Lampe und Schicht kann zwischen 10 und 100 cm schwanken, die Belichtungszeit zwischen mehreren Sekunden und einigen Minuten. Durch die Wahl des Abstands und der Belichtungszeit kann der Grad der Härtung gezielt eingestellt werden. Die Gelcoat-Schicht sollte auf jeden Fall verfestigt aber noch nicht klebfrei ausgehärtet werden.

Im nächsten Schritt wird das oben beschriebene Laminat mit der Gelcoat-Schicht zusammengeführt. Dies geschieht zweckmäßigerweise dadurch, daß eine Laminatbahn auf die gehärtete Gelcoat-Schicht aufgelegt wird. Dann wird entlüftet, indem z. B. mit einer Rolle Luftblasen zwischen Laminat und Gelcoat-Schicht ausgepreßt werden.

Schließlich wird ein thermischer Härtungsprozeß durchgeführt. Vorzugsweise wird dabei das Laminat auf Temperaturen von 50 - 180°C, insbesondere von 80 bis 150°C erwärmt. Dabei härtet das UP-Harz des Laminats aus und verbindet sich fest mit der Gelcoat-Schicht, die - insbesondere wenn sie Peroxid-Initiatoren enthält - ebenfalls vollständig aushärtet. Wenn das Laminat kalthärtende Initiator-Systeme enthält, kann die Härtung auch durch mehrstündige Lagerung bei Raumtemperatur durchgeführt werden.

Mit dem erfindungsgemäßen Verfahren können auch großflächige GFK-Formteile mit dekorativer Oberfläche und pigmentierter Schutzschicht hergestellt werden. Solche Formteile können als Container-Platten, Türblätter und für Automobilteile, z. B. LKW-Aufbauten verwendet werden.

Die in den Beispielen genannte Teile und Prozente beziehen sich auf das Gewicht.

### Beispiel 1

A. Eine Gelcoat-Schicht wurde hergestellt aus
   - einem Orthophthalsäure/Propylenglykolharz (PALATAL P 97 IL-02), enthaltend
   - 0,4 % 2,4,6-Trimethylbenzoyl-diphenylphosphinoxid (LUCIRIN TPO),
   - 0,5 % tert. Butylperoxyethylhexanoat,
   - 0,1 % Cobaltoctoat (1%ig),
   - 5,0 % Titandioxid-Paste (50%ig).

   Diese Schicht wurde 0,2 mm dick auf eine 2 m breite Polyester-Folie (MYLAR), die kontinuierlich auf einem Gummiband geführt wurde, aufgerakelt.
B. Die Gelcoat-Schicht wurde durch Belichten mit einer Hönle-UVASPOT 400 T-Lampe (Abstand 50 cm), Belichtungszeit 90 sec) gehärtet.
C. Ein Laminat wurde hergestellt aus 100 Teilen eines Orthophthalsäure/Propylenglykol-Harzes (PALATAL P 4-01), 5 Teilen TiO₂-Paste, 3 Teilen Methylisobutylketonperoxid (50 % in Weichmacher), 0,3 Teile Cobaltoctoat (1%ig), sowie zwei Lagen Glasfasermatten (Flächengewicht 450 g·m⁻²).
D. Das Laminat wurde auf die auf dem Gummiband geführten Gelcoat-Schicht aufgetragen; durch Walzen wurde entlüftet und dadurch ein enger Kontakt zwischen Gelcoat-Schicht und Laminat hergestellt.
E. Der Verbund wurde in einem Wärmeschrank 20 min bei 95°C gehärtet.

### Beispiel 2

A. Eine Gelcoat-Schicht wurde hergestellt aus
   - einem Isophthalsäure/Propylenglykolharz (PALATAL A 400-01),
   - 0,4 % 2,4,6-Trimethylbenzoyldiphenylphosphinoxid (LUCIRIN TPO),
   - 0,2 % Lichtschutzmittel (TINUVIN 320),
   - 0,5 % tert.Butylperoxyethylhexanoat,
   - 6,0 % Titandioxid-Paste (50%ig).

   Diese Schicht wurde 0,2 mm dick auf eine 3 m breite Polyester-Folie, die kontinuierlich auf einem Gummiband geführt wurde, aufgerakelt.
B. Die Gelcoat-Schicht wurde durch Belichten mit einer Hönle-UVASPOT 400 T-Lampe (Abstand 50 cm, Belichtungszeit 1 min) gehärtet.
C. Ein Laminat wurde hergestellt aus 100 Teilen eines Orthophthalsäure/Propylenglykol-Harzes (PALATAL P 4 - 01), 5 Teilen TiO₂-Paste, 2 Teilen Methylethylketonperoxid (50%ig in Weichmacher), 0,2 Teile Cobaltoctoat (1%ig), sowie einer Lage Glasfasermatte (Flächengewicht 450 g·m⁻²).
D. Das Laminat wurde, wie in Beispiel 1 beschrieben, mit der Gelcoat-Schicht zusammengeführt und entlüftet.
E. Der Verbund wurde bei Raumtemperatur gehärtet und nach 24 h bei 28°C 24 h lang nachgehärtet.

## Patentansprüche

1. Verfahren zur Herstellung von an der Oberfläche pigmentierten Formteilen auf Basis von Laminaten aus glasfaserverstärkten thermisch härtbaren ungesättigten Polyesterharzen (UP-Harzen) durch
A. Aufbringen einer 0,1 bis 1 mm dicken Gelcoat-Schicht aus einem lichthärtbaren UP-Harz, welches 0,01 bis 3 Gew.-% eines Acylphosphinoxid- oder Bisacylophosphinoxid-Photoinitiators enthält, auf eine feste Unterlage,
B. Bestrahlen der Gelcoat-Schicht mit UV-Licht zur mindestens teilweisen Härtung des UP-Harzes,
C. Zusammenführen des ungehärteten Laminats mit der Gelcoat-Schicht und Entlüften, und
D. Verfestigen des Laminats durch thermisches Härten des UP-Harzes,
dadurch gekennzeichnet, daß die Gelcoat-Schicht 0,5 bis 10 Gew.-% eines für UV-Licht undurchlässigen Farbpigments enthält.

2. Verfahren nach Anspruch 1, dadurch gekennzeichnet, daß die Gelcoat-Schicht 0,1 bis 1 Gew.-% eines Thixotropiermittels enthält.

3. Verfahren nach Anspruch 1, dadurch gekennzeichnet, daß die Gelcoat-Schicht zusätzlich 0,1 bis 1 Gew.-% eines konventionellen Photoinitiators enthält.

4. Verfahren nach Anspruch 1, dadurch gekennzeichnet, daß die Gelcoat-Schicht zusätzlich 0,1 bis 1 Gew.-% eines Peroxid-Initiators enthält.

5. Verfahren nach Anspruch 1, dadurch gekennzeichnet, daß die Gelcoat-Schicht auf eine ebene Unterlage, vorzugsweise eine styrolundurchlässige Kunststoffolie aufgebracht wird.

6. Verfahren nach Anspruch 1, dadurch gekennzeichnet, daß das Härten des UP-Harzes in Stufe D durch Erwärmen auf 80°C bis 150°C durchgeführt wird.

7. Verwendung der nach Anspruch 1 hergestellten Formteile für Automobilteile, Containerplatten und Türblätter.

## Claims

1. Process for producing pigmented moulded articles composed of laminates made of glass-fibre reinforced thermally curable unsaturated polyester resins (UP resins) and having pigmented surfaces by
A. application to a solid substrate of a gel-coat layer of 0.1 to 1 mm in thickness and composed of a light-curable UP resin containing 0.01 to 3 wt.% of an acyl phosphine oxide photoinitiator or bisacyl phosphine oxide photoinitiator,
B. irradiation of the gel-coat layer with UV light until the UP resin is at least partly cured,
C. bringing together of the uncured laminate and the gel-coat layer and deaeration, and
D. solidification of the laminate by thermally curing the UP resin,
characterised in that the gel-coat layer contains 0.5 to 10 wt.% of a coloured pigment which is impermeable to UV light.

2. Process according to claim 1, characterised in that the gel-coat layer contains 0.1 to 1 wt.% of a thixotropic agent.

3. Process according to claim 1, characterised in that the gel-coat layer contains in addition 0.1 to 1 wt.% of a conventional photoinitiator.

4. Process according to claim 1, characterised in that the gel-coat layer contains in addition 0.1 to 1 wt.% of a peroxide initiator.

5. Process according to claim 1, characterised in that the gel-coat layer is applied to a flat substrate, preferably to a plastics film which is impermeable to styrene.

6. Process according to claim 1, characterised in that the curing of the UP resin in step D is carried out by heating at 80°C to 150°C.

7. Use of the moulded articles produced according to claim 1 for automobile parts, container plates and door leaves.

## Revendications

1. Procédé de fabrication des pièces moulées pigmentées à la surface à base de stratifiés en résines polyester insaturées (UP) durcissables thermiquement, renforcées de fibres de verre par
A. dépôt d'une couche d'enduit gélifié (gelcoat) de 0,1 à 1 mm d'épaisseur en résine UP durcissable sous l'action de la lumière, qui contient 0,01 à 3% en poids d'un photoinitiateur de type oxyde d'acyl-phosphine ou oxyde de bisacylphosphine, sur un support solide.
B. Insolation de la couche d'enduit gélifié en lumière UV jusqu'à au moins le durcissement partiel de la résine UP.
C. Plaquage du stratifié non durci avec la couche d'enduit gélifié et dégazage, et
D. Durcissement du stratifié par durcissement thermique de la résine UP,
caractérisé en ce que la couche d'enduit gélifié contient 0,5 à 10% en poids d'un pigment coloré opaque en lumière UV.

2. Procédé selon la revendication 1, caractérisé en ce que la couche d'enduit gélifié contient 0,1 à 1% en poids d'un agent de thixotropie.

3. Procédé selon la revendication 1, caractérisé en ce que la couche d'enduit gélifié contient en plus 0,1 à 1% en poids d'un photoinitiateur conventionnel.

4. Procédé selon la revendication 1, caractérisé en ce que la couche d'enduit gélifié contient en plus 0,1 à 1% en poids d'un initiateur de type peroxyde.

5. Procédé selon la revendication 1, caractérisé en ce que la couche d'enduit gélifié est déposée sur un support plan, de préférence un film de matière plastique imperméable au styrène.

6. Procédé selon la revendication 1, caractérisé en ce qu'on effectue le durcissement de la résine UP à l'étape D par chauffage de 80°C à 150°C.

7. Utilisation des pièces moulées fabriquées selon la revendication 1 pour des pièces d'automobile, des plaques de conteneur et des vantaux de porte.
